# EUROPÄISCHE PATENTSCHRIFT

(11) **EP 2 500 183 B1**
(45) Veröffentlichungstag und Bekanntmachung des Hinweises auf die Patenterteilung: **25.12.2013**
(21) Anmeldenummer: 12158705.9
(22) Anmeldetag: 09.03.2012
(51) Int. Cl.: B60B 33/06

(54) **Hubrolleneinheit und Transportvorrichtung mit derartigen Hubrolleneinheiten**
Lifting roll unit and transport device with such lifting roll units
Unité de rouleaux de levage et dispositif de transport doté de telles unités de rouleaux de levage

(30) Priorität: 15.03.2011 DE 102011014115
(43) Veröffentlichungstag der Anmeldung: 19.09.2012
(73) Patentinhaber: Fath GmbH, 91174 Spalt (DE)
(72) Erfinder: Fath, Jan Mirko, 91166 Georgensmünd (DE)
(74) Vertreter: Simon, Josef

(56) Entgegenhaltungen:
- DE-B- 1 089 135
- GB-A- 956 634
- US-A- 2 823 924
- US-A- 2 874 971
- US-A- 5 253 389

## Beschreibung

Die Erfindung betrifft eine Hubrolleneinheit, mit einem Grundkörper und einer Rolle, die mittels eines Betätigungselements relativ zum Grundkörper derart höhenverstellbar ist, dass die Hubrolleneinheit in einer ausgefahrenen Stellung auf der Rolle und in einer eingefahrenen Stellung auf dem Grundkörper oder einem damit verbundenen Bauteil aufsteht, wobei die Rolle an einem drehbaren Rollenträger angeordnet ist, der durch das Betätigungselement entlang einer Laufbahn des Grundkörpers bewegbar ist.

Eine derartige Hubwelleneinheit ist aus der US 2874971 A bekannt. Die Druckschriften US 2823924 A und DE 1089135 B zeigen ebenfalls ähnlich aufgebaute Hubrolleneinheiten.

Hubrolleneinheiten dieser Art werden benutzt, um schwere Gegenstände, beispielsweise Maschinen oder Maschinenkomponenten oder andere schwere Güter rollend zu transportieren und an einem vorgesehenen Ort abzustellen. Mehrere Hubrolleneinheiten können dabei zu einer Transportvorrichtung zusammengefasst sein, die einen Rahmen, eine Auflagefläche, eine Wanne oder dergleichen für den zu transportierenden Gegenstand aufweist. Üblicherweise ist eine Hubrolleneinheit zwischen zwei Stellungen bewegbar. In einer ersten Stellung ist die Rolle ausgefahren, das heißt die Rolle steht von der Unterseite der Transportvorrichtung weiter ab als der Grundkörper oder ein damit verbundenes Bauteil, so dass die Hubrolleneinheit bzw. die Transportvorrichtung an einen gewünschten Ort verschoben werden kann. Die Rolle kann aus der ausgefahrenen Stellung in eine zweite, eingefahrene Stellung bewegt werden, in der die Hubrolleneinheit mit ihrem Grundkörper oder einem damit verbundenen Bauteil auf dem Untergrund aufsteht. In dieser Stellung verbleibt das zu transportierende Gut, etwa eine Maschine oder ein Maschinenteil, an seinem Platz. Sofern dieser Gegenstand zu einem späteren Zeitpunkt an einen anderen Ort gebracht werden muss, beispielsweise im Rahmen eines Umbaus einer Produktionslinie, kann die Rolle der Hubrolleneinheit wieder in die ausgefahrene Stellung bewegt werden, um eine Verschiebung zu ermöglichen.

Herkömmliche Hubrolleneinheiten stoßen allerdings bei schweren Lasten schnell an ihre Grenzen, es besteht daher Bedarf an einer Hubrolleneinheit, die auch für schwere Lasten einsetzbar ist.

Der Erfindung liegt daher die Aufgabe zugrunde, eine Hubrolleneinheit anzugeben, die auch für schwere Lasten einsetzbar ist.

Zur Lösung dieser Aufgabe ist es bei einer Hubrolleneinheit der eingangs genannten Art erfindungsgemäß vorgesehen, dass das Betätigungselement hydraulisch oder pneumatisch steuerbar ist.

Der Erfindung liegt die Erkenntnis zugrunde, dass die erforderliche Hubbewegung der Rolle durch eine Drehbewegung des Rollenträgers relativ zu dem Grundkörper realisiert werden kann. Auf diese Weise wird eine maschinelle oder automatische Betätigung des Betätigungselements ermöglicht, das eine lineare Verschiebebewegung ausführt, die in eine Drehbewegung entlang der Laufbahn umgewandelt wird.

Bei der erfindungsgemäßen Hubrolleneinheit kann es vorgesehen sein, dass der Rollenträger eine runde Grundform aufweist und in einer Öffnung des Grundkörpers aufgenommen ist. Auf diese Weise kann der Rollenträger eine Drehbewegung durchführen, wenn er von der eingefahrenen Stellung in die ausgefahrene Stellung oder umgekehrt bewegt wird.

Um die Handhabung weiter zu vereinfachen, kann es vorgesehen sein, dass die Rolle der erfindungsgemäßen Hubrolleneinheit gegenüber dem Rollenträger drehbar ist. Auf diese Weise wird das Rangieren erleichtert.

Gemäß einer Weiterbildung der Erfindung kann vorgesehen sein, dass der Rollenträger einen verlängerten Abschnitt aufweist, an dem das Betätigungselement angeordnet ist. Dieser verlängerte Abschnitt wirkt als Hebelarm, an dem eine Zug-oder Druckkraft des Betätigungselements angreift. Vorzugsweise ist das Betätigungselement gelenkig an dem verlängerten Abschnitt angeordnet, vorzugsweise an einem äußeren Abschnitt des Rollenträgers, wodurch ein Hebelarm zwischen dem Gelenk und dem Zentrum des Rollenträgers gebildet wird. Dementsprechend kann bei einer Betätigung des Betätigungselements ein Drehmoment auf den Rollenträger ausgeübt werden, so dass dieser entlang der Laufbahn bewegt wird und die Rolle die Hubbewegung durchführt.

Das Betätigungselement ist hydraulisch oder pneumatisch steuerbar. Dadurch ergibt sich der Vorteil, dass die Hubbewegung, das heißt die Bewegung der Rolle von der eingefahrenen Stellung in die ausgefahrene Stellung ohne manuellen Krafteinsatz möglich ist, stattdessen wird das Betätigungselement durch den Druck eines pneumatischen oder hydraulischen Fluids bewegt. Vorzugsweise kann das Betätigungselement einen Kolben umfassen, der eine Verschiebebewegung durchführt und dadurch den Rollenträger verdreht, wodurch die Hubbewegung erzeugt wird.

Es liegt auch im Rahmen der Erfindung, dass die Laufbahn an oder in dem Grundkörper oder dem Rollenkörper ausgebildet ist und das jeweils andere Teil wenigstens ein entlang der Führungsbahn bewegbares Führungselement aufweist. Das Führungselement, das beispielsweise als Bolzen, Vorsprung oder dergleichen ausgebildet sein kann, bewirkt die Kraftübertragung von dem Grundkörper auf den Rollenträger und umgekehrt.

Bei der erfindungsgemäßen Hubrolleneinheit kann die Laufbahn mehrere, vorzugsweise zwei bis fünf, in Umfangsrichtung beabstandet angeordnete Laufbahnabschnitte aufweisen. Da die Drehbewegung nur einen kleinen Teil des Umfangs umfasst, können mehrere nebeneinander angeordnete Laufbahnabschnitte vorgesehen sein, durch die eine gleichmäßigere Kraftübertragung von dem Rollenträger auf den Grundkörper und umgekehrt erzielt werden kann.

Daneben betrifft die Erfindung eine Transportvorrichtung. Die erfindungsgemäße Transportvorrichtung umfasst mehrere Hubrolleneinheiten der beschriebenen Art. Vorzugsweise umfasst eine Transportvorrichtung vier Hubrolleneinheiten.

In weiterer Ausgestaltung der Erfindung kann die erfindungsgemäße Transportvorrichtung einen eine Auflagefläche bildenden Rahmen aufweisen, an dem die Hubrolleneinheiten angeordnet sind. Auf diesen Rahmen kann das zu transportierende Gut aufgesetzt und anschließend verschoben werden. Selbstverständlich können bei großformatigen Gütern auch mehrere Transportvorrichtungen verwendet werden. Um die Rollen von der eingefahrenen Stellung in die ausgefahrene Stellung zu bewegen, kann die Transportvorrichtung eine Vorrichtung zur Erzeugung eines hydraulischen oder pneumatischen Drucks aufweisen, der für den Betrieb des Betätigungsglieds erforderlich ist. Die Vorrichtung kann beispielsweise einen Hebel oder eine Kurbel aufweisen, um den erforderlichen Druck für das hydraulische oder pneumatische Fluid zu erzeugen, ebenso ist an der Transportvorrichtung ein Ablassventil vorgesehen, um die Rollen in die eingefahrene Stellung zu bewegen.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: eine erfindungsgemäße Hubrolleneinheit in einer Explosionsansicht;
- Fig. 2: eine Zusammenbauzeichnung der Hubrolleneinheit von Fig. 1;
- Fig. 3: eine Unteransicht der Hubrolleneinheit von Fig. 2;
- Fig. 4: eine Seitenansicht der Hubrolleneinheit in eingefahrener Stellung;
- Fig. 5: die in Fig. 4 gezeigte Hubrolleneinheit in ausgefahrener Stellung;
- Fig. 6: eine erfindungsgemäße Transportvorrichtung in einer perspektivischen Ansicht;
- Fig. 7: eine Ansicht des Eckbereichs der Transportvorrichtung von Fig. 6 von unten in einer vergrößerten Ansicht; und
- Fig. 8: eine Vorrichtung zur Erzeugung eines hydraulischen oder pneumatischen Drucks.

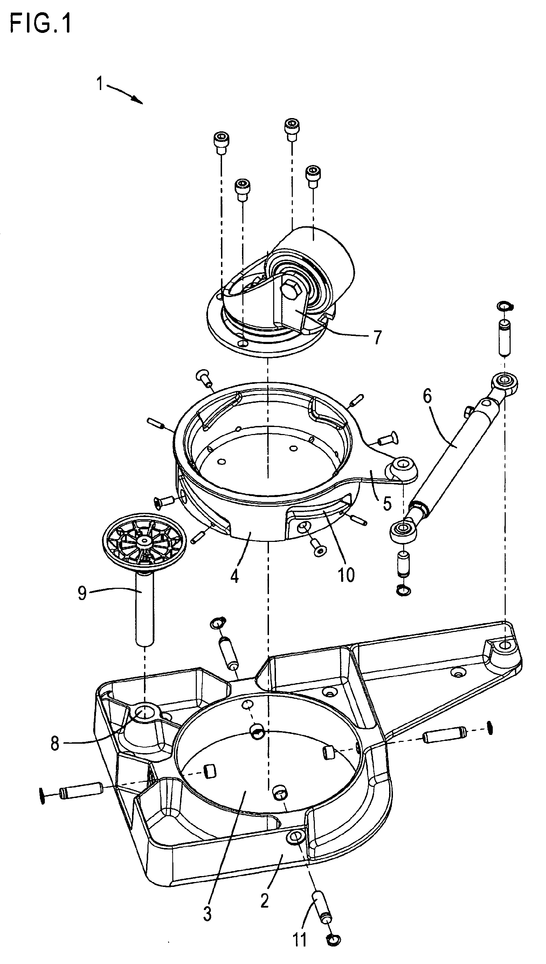

Fig. 1 zeigt eine Hubrolleneinheit 1 in einer Explosionsansicht. Die Hubrolleneinheit 1 besteht im Wesentlichen aus einem Grundkörper 2, der eine runde Öffnung 3 aufweist, in der ein Rollenträger 4 aufgenommen ist. Der Rollenträger 4 besitzt eine runde Grundform, an einem verlängerten Abschnitt 5 des Rollenträgers 4 ist ein Betätigungselement 6 befestigbar oder befestigt. In dem dargestellten Ausführungsbeispiel ist das Betätigungselement 6 als hydraulischer Hubzylinder ausgebildet, der gelenkig einerseits mit dem verlängerten Abschnitt 5 und andererseits mit dem Grundkörper 2 verbunden ist.

An dem Rollenträger 4 ist eine Rolle 7 angebracht, die um eine gedachte Hochachse des Rollenträgers 4 drehbar ist.

Der Grundkörper 2 weist eine Öffnung 8 zum Aufnehmen eines Stellfußes 9 auf. Die Höhe des Stellfußes 9 ist einstellbar. In der eingefahrenen Stellung steht die Hubrolleneinheit lediglich auf dem Stellfuß auf, in der ausgefahrenen Stellung steht die Hubrolleneinheit 1 auf der Rolle 7 auf.

Der Rollenträger 4 weist mehrere in Umfangsrichtung verteilt angeordnete schräg verlaufende Nuten 10 auf, die eine Laufbahn für Bolzen 11 bilden, die in die Öffnung 3 des Grundkörpers 2 eingesetzt sind. Im montierten Zustand durchsetzt jeder Bolzen 11 die zugehörige Nut 10, wodurch Grundkörper 2 und Rollenträger 4 derart miteinander verbunden sind, dass eine Relativdrehung möglich ist, während die Bolzen 11 sich entlang der Nut 10 bewegen. Wegen der Neigung der Nut bewirkt eine Verdrehung auch eine Hubbewegung des Rollenträgers 4, dementsprechend verändert sich die relative Höhe zwischen dem Stellfuß 9 und der Rolle 7. Die Neigung der Nuten und die Länge und Anordnung von Stellfuß 9 und Rolle 7 sind dabei so gewählt, dass in einer Extremposition, im eingefahrenen Zustand, Rolle 7 und Stellfuß 9 sich auf gleicher Ebene befinden, gegebenenfalls kann die Rolle 7 auch leicht erhöht gegenüber einer Bodenebene sein. In der anderen Extremlage, im ausgefahrenen Zustand, ist die Rolle 7 weiter entfernt von dem Grundkörper 2 als der Stellfuß 9, so dass die Rolle 7 auf einem Untergrund aufsteht und sich der Stellfuß 9 in der Luft befindet.

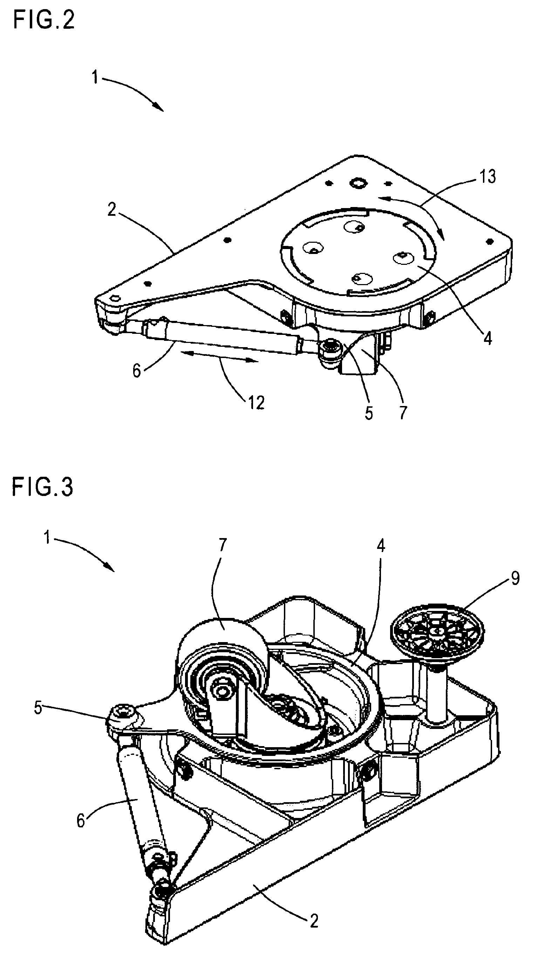

Die Fig. 2 und 3 zeigen die Hubrolleneinheit von Fig. 1 im montierten Zustand, wobei Fig. 2 eine perspektivische Ansicht der Oberseite und Fig. 3 eine perspektivische Ansicht der Unterseite ist. In diesen Ansichten erkennt man besonders gut, dass das als hydraulischer Zylinder ausgebildete Betätigungselement 6 einerseits an einem von der Öffnung 3 entfernten Abschnitt des Grundkörpers 2 und anderseits an dem verlängerten Abschnitt 5 des Rollenträgers 4 angeordnet ist. Eine durch einen Pfeil 12 angedeutete Verschiebebewegung des Betätigungselements 6 wird in eine durch einen Pfeil 13 angedeutete Drehbewegung umgesetzt, die durch die Kopplung des Rollenträgers 4 mit dem Grundkörper 2 auch eine vertikale Bewegungskomponente des Rollenträgers 4 und der Rolle 7 mit sich bringt.

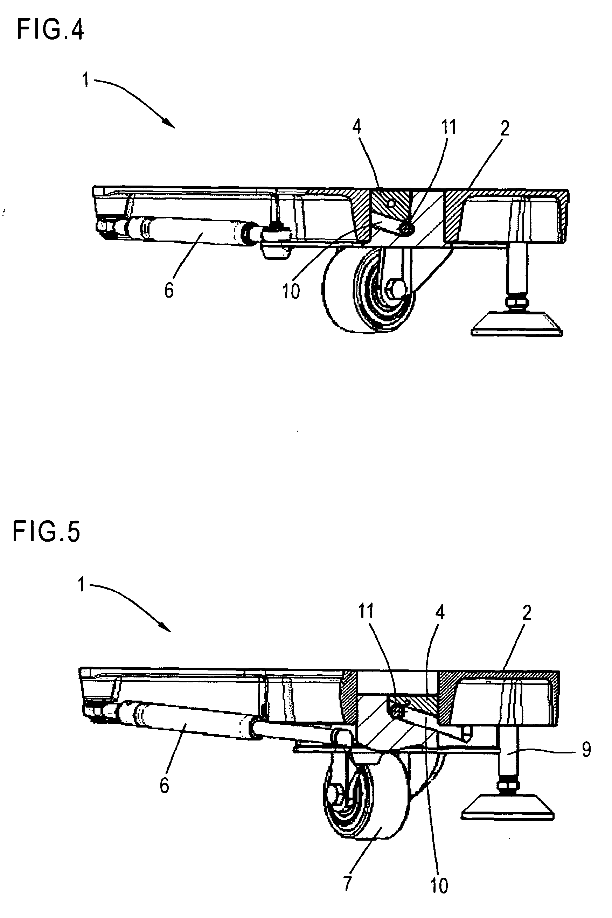

Die Fig. 4 und 5 sind Seitenansichten der Hubrolleneinheit 1 und verdeutlichen insbesondere den Bewegungsablauf beim Wechsel von der eingefahrenen Stellung zur ausgefahrenen Stellung und umgekehrt. Fig. 4 zeigt die Hubrolleneinheit 1 in der eingefahrenen Stellung, wenn sie auf dem Stellfuß 9 aufsteht. Die Rolle 7 befindet sich ebenfalls exakt auf der Bodenebene oder ist erhöht, durch die Reibung zwischen Stellfuß 9 und dem Boden ist keine Verschiebung der Hubrolleneinheit 1 möglich. In der geschnittenen Ansicht von Fig. 4 sieht man, dass sich der Bolzen 11 in der untersten Position der Nut 10, die die Laufbahn bildet, befindet. Der Rollenträger 4, der die Nuten 10 aufweist, ist oberflächenbündig zur Oberseite des Grundkörpers 2 positioniert. Bei einer Betätigung des Betätigungselements 6, genauer gesagt bei einer Ausfahrbewegung des Kolbens, führt der Rollenträger 4, an dessen verlängertem Abschnitt 5 der Kolben angreift, eine Drehbewegung durch. Der Rollenträger 4 dreht sich dabei mit seinen Nuten 10 um die ortsfesten Bolzen 11 des Grundkörpers 2, bis die in Fig. 5 gezeigte maximal ausgefahrene Endposition erreicht ist. Der Rollenträger 4 ist abgesenkt, so dass sich die Rolle 7 unterhalb des Stellfußes 9 befindet. In diesem Zustand hemmt der Stellfuß 9 eine Verschiebung der Hubrolleneinheit 1 nicht mehr, so dass diese leicht verschoben werden kann.

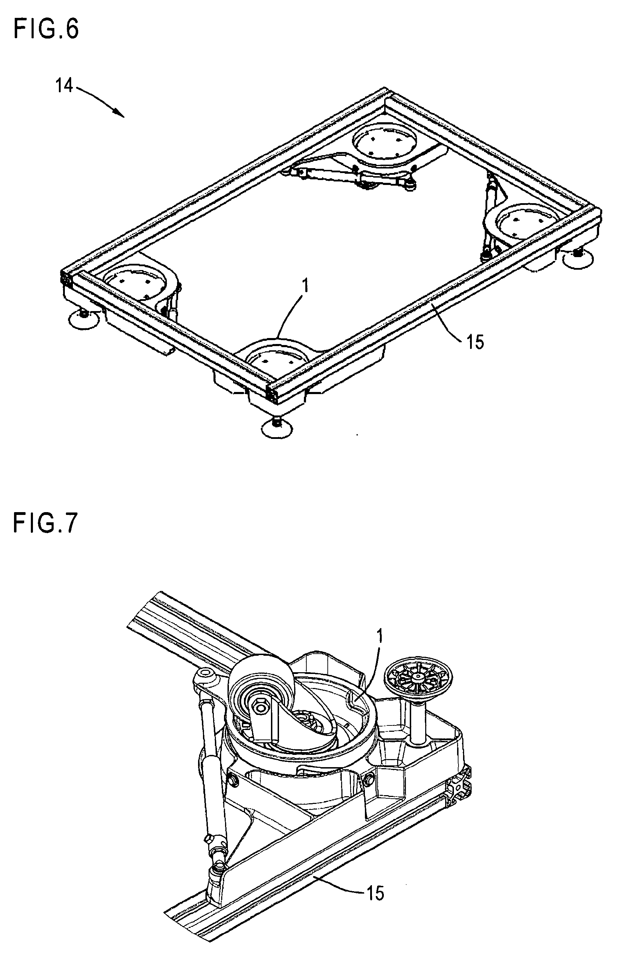

Fig. 6 zeigt eine Transportvorrichtung 14, die vier Hubrolleneinheiten 1 umfasst, die an den Ecken eines Rahmens 15 befestigt sind. Der rechteckige Rahmen 15 besteht aus Profilabschnitten mit hinterschnittenen Nuten, wodurch eine Befestigung der Hubrolleneinheiten 1 erleichtert wird.

Fig. 7 zeigt eine Ecke der Transportvorrichtung 14 in einer Ansicht von unten in einem vergrößerten Maßstab. Die Hubrolleneinheit 1 ist an den beiden Profilabschnitten des Rahmens 15, die die Ecke bilden, befestigt. Die Hubrolleneinheiten 1 der Transportvorrichtung 14 sind über in Fig. 6 nicht gezeigte Hydraulikleitungen miteinander verbunden, so dass sämtliche Hubrolleneinheiten 1 gleichzeitig betätigt werden können.

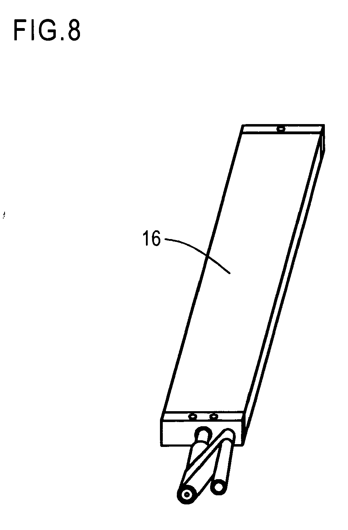

Fig. 8 zeigt schematisch eine manuell betätigbare Vorrichtung 16 zur Erzeugung eines hydraulischen Drucks. Dieser hydraulische Druck wird über die erwähnten Hydraulikleitungen an die Hubrolleneinheiten 1 geleitet, wodurch diese von der eingefahrenen Position in die ausgefahrene Position bewegt werden. Für die umgekehrte Bewegung ist lediglich das Öffnen eines Druckablassventils erforderlich.

Es sind auch andere Ausführungsbeispiele denkbar, bei denen ein hydraulischer oder pneumatischer Druck durch eine Hydraulikpumpe, einen Kompressor und ein anderes Hilfsaggregat erzeugt wird. Ebenso kann die Steuerung der Hubrolleneinheiten 1 von einer zentralen Steuerung eines Geräts oder einer Maschine erfolgen.

## Patentansprüche

1. Hubrolleneinheit (1), mit einem Grundkörper (2) und einer Rolle (7), die mittels eines Betätigungselements (6) relativ zum Grundkörper (2) derart höhenverstellbar ist, dass die Hubrolleneinheit (1) in einer ausgefahrenen Stellung auf der Rolle (7) und in einer eingefahrenen Stellung auf dem Grundkörper (2) oder einem damit verbundenen Bauteil aufsteht, wobei die Rolle (7) an einem drehbaren Rollenträger (4) angeordnet ist, der durch das Betätigungselement (6) entlang einer Laufbahn des Grundkörpers (2) bewegbar ist, **dadurch gekennzeichnet, dass** das Betätigungselement (6) hydraulisch oder pneumatisch steuerbar ist.

2. Hubrolleneinheit nach Anspruch 1, **dadurch gekennzeichnet, dass** der Rollenträger (4) eine runde Grundform aufweist und in einer Öffnung des Grundkörpers (2) aufgenommen ist.

3. Hubrolleneinheit nach Anspruch 1 oder 2, **dadurch gekennzeichnet, dass** die Rolle (7) gegenüber dem Rollenträger (4) drehbar ist.

4. Hubrolleneinheit nach einem der vorangehenden Ansprüche, **dadurch gekennzeichnet, dass** der Rollenträger (4) einen verlängerten Abschnitt (5) aufweist, an dem das Betätigungselement (6) angeordnet ist.

5. Hubrolleneinheit nach einem der vorangehenden Ansprüche, **dadurch gekennzeichnet, dass** die Laufbahn an oder in dem Grundkörper (2) oder dem Rollenträger (4) ausgebildet ist und das jeweils andere Teil wenigstens ein entlang der Laufbahn bewegbares Führungselement aufweist.

6. Hubrolleneinheit nach einem der vorangehenden Ansprüche, **dadurch gekennzeichnet, dass** die Laufbahn mehrere, vorzugsweise zwei bis fünf, in Umfangsrichtung beabstandet angeordnete Laufbahnabschnitte aufweist.

7. Transportvorrichtung, umfassend mehrere, vorzugsweise vier, Hubrolleneinheiten (1) nach einem der Ansprüche 1 bis 6.

8. Transportvorrichtung nach Anspruch 7, **dadurch gekennzeichnet, dass** sie einen eine Auflagefläche bildenden Rahmen (15) aufweist, an dem die Hubrolleneinheiten (1) angeordnet sind.

9. Transportvorrichtung nach Anspruch 7 oder 8, **dadurch gekennzeichnet, dass** sie eine Vorrichtung (16) zur Erzeugung eines hydraulischen oder pneumatischen Drucks für das Betätigungselement (6) aufweist.

## Claims

1. Lifting roller unit (1) having a basic body (2) and a roller (7) which is height adjustable in relation to the basic body (2) by means of an actuating element (6) in such a manner that the lifting roller unit (1) in a deployed position bears on the roller (7) and in a retracted position bears on the basic body (2) or a component connected to said basic body (2), the roller (7) being located on a rotatable roller support (4) which is movable by the actuating element (6) along a motion path of the basic body (2), **characterized in that** the actuating element (6) can be hydraulically or pneumatically controlled.

2. Lifting roller unit according to Claim 1, **characterized in that** the roller support (4) has a round basic shape and is accommodated in an opening of the basic body (2).

3. Lifting roller unit according to Claim 1 or 2, **characterized in that** the roller (7) is rotatable in relation to the roller support (4).

4. Lifting roller unit according to one of the preceding claims, **characterized in that** the roller support (4) has an extended portion (5) on which the actuating element (6) is located.

5. Lifting roller unit according to one of the preceding claims, **characterized in that** the motion path is configured on or in the basic body (2) or the roller support (4), and the other part in each case has at least one guide element which is movable along the motion path.

6. Lifting roller unit according to one of the preceding claims, **characterized in that** the motion path has a plurality of, preferably two to five, motion path portions which are located in a spaced-apart manner in the circumferential direction.

7. Transport device comprising a plurality of, preferably four, lifting roller units (1) according to one of Claims 1 to 6.

8. Transport device according to Claim 7, **characterized in that** said transport device has a frame (15) forming a supporting face, on which frame (15) the lifting roller units (1) are located.

9. Transport device according to Claim 7 or 8, **characterized in that** said transport device has a device (16) for generating a hydraulic or pneumatic pressure for the actuating element (6).

## Revendications

1. Unité de rouleaux de levage (1), avec un corps de base (2) et un rouleau (7) pouvant être déplacé en hauteur par rapport au corps de base (2) à l'aide d'un élément d'actionnement (6), de telle sorte que l'unité de rouleaux de levage (1) surplombe le rouleau (7) dans une position sortie et le corps de base (2) ou un composant relié à lui dans une position rentrée, le rouleau (7) étant disposé au niveau d'un support de roulement (4) et pouvant pivoter et tourner le long d'une trajectoire de déplacement du corps de base (2) du fait de l'élément d'actionnement (6), **caractérisée en ce que** l'élément d'actionnement (6) peut être commande de façon hydraulique ou pneumatique.

2. Unité de rouleaux de levage selon la revendication 1, **caractérisée en ce que** le support de roulement (4) présente une forme de base ronde et est logé dans une ouverture du corps de base (2).

3. Unité de rouleaux de levage selon la revendication 1 ou 2, **caractérisée en ce que** le rouleau (7) peut pivoter par rapport au support de roulement (4).

4. Unité de rouleaux de levage selon l'une quelconque des revendications précédentes, **caractérisée en ce que** le support de roulement (4) comporte une section (5) rallongée au niveau de laquelle l'élément d'actionnement (6) est disposé.

5. Unité de rouleaux de levage selon l'une quelconque des revendications précédentes, **caractérisée en ce que** la trajectoire de déplacement est réalisée au niveau du corps de base (2) ou du support de roulement (4) ou dans eux et que l'autre partie respectivement comporte au moins un élément de guidage mobile situé le long de la trajectoire de déplacement.

6. Unité de rouleaux de levage selon l'une quelconque des revendications précédentes, **caractérisée en ce que** la trajectoire de déplacement comporte plusieurs sections de trajectoire de déplacement, de préférence de deux à cinq, disposées à une certaine distance les unes des autres dans la direction périphérique.

7. Dispositif de transport, comprenant plusieurs unités de rouleaux de levage (1), de préférence quatre, selon l'une quelconque des revendications 1 à 6.

8. Dispositif de transport selon la revendication 7, **caractérisé en ce qu'**il comporte un cadre (15) formant une surface portante au niveau duquel les unités de rouleaux de levage (1) sont disposées.

9. Dispositif de transport selon la revendication 7 ou 8, **caractérisé en ce qu'**il comporte un dispositif (16) permettant de générer une pression hydraulique ou pneumatique pour l'élément d'actionnement (6).
